Europäisches Patentamt

European Patent Office

Office européen des brevets

(11) Veröffentlichungsnummer: **0 249 109 B1**

# (12) EUROPÄISCHE PATENTSCHRIFT

(45) Veröffentlichungstag der Patentschrift: **11.03.92**

(21) Anmeldenummer: **87107841.6**

(22) Anmeldetag: **29.05.87**

(51) Int. Cl.⁵: **B32B 3/26**, B44C 3/02, B32B 31/12

---

(54) **Dekorative Überzugsfolie.**

---

(30) Priorität: **07.06.86 DE 8615466 U**
**14.10.86 DE 3634885**

(43) Veröffentlichungstag der Anmeldung:
**16.12.87 Patentblatt 87/51**

(45) Bekanntmachung des Hinweises auf die
Patenterteilung:
**11.03.92 Patentblatt 92/11**

(84) Benannte Vertragsstaaten:
**DE FR GB IT LU NL**

(56) Entgegenhaltungen:
DE-A- 2 730 899       DE-U- 7 833 995
FR-A- 2 081 832       FR-A- 2 216 108
GB-A- 1 481 876       US-A- 3 579 395

(73) Patentinhaber: **HOECHST AKTIENGESELL-
SCHAFT
Postfach 80 03 20
W-6230 Frankfurt am Main 80(DE)**

(72) Erfinder: **Meise, Carl-Eduard
Am Hohen Stein 6
W-6200 Wiesbaden(DE)**
Erfinder: **Bodatsch, Dietrich
Hirschanger 17
W-4300 Essen(DE)**

---

EP 0 249 109 B1

**Beschreibung**

Die vorliegende Erfindung betrifft die Verwendung einer dekorativen geprägten Überzugsfolie umfassend eine Basisfolie und eine Deckfolie.

Es ist bekannt, Wände, Decken u.a. sowie Einrichtungsgegenstände in Schiffen, Fahrzeugen, Eisenbahnwagen, Flugzeugen und auch in Gebäuden zu Dekorations- und Hinweiszwecken sowie zum Schutz vor Korrosion und vor mechanischer Beanspruchung mit Kunststoffolien aus Polyvinylhalogenid, insbesondere aus Polyvinylchlorid oder Polyvinylfluorid zu überziehen.

In der Europäischen Patentschrift 0 103 407 wird ein dekorativer Verbundgegenstand beansprucht, der an einer Trägerschicht aus einem Vinylsubstrat fixiert ist, bestehend aus einem Polyvinylchloridfilm und einer Kleberschicht, mit der dieser Film an den Träger gebunden ist, und einer dritten Schicht zwischen der Klebstoffschicht und dem Polyvinylchloridfilm. Der Verbundgegenstand, der vorzugsweise bedruckt sein kann, soll vorwiegend dekorativen Zwecken genügen, so z.B. zur Verkleidung von Wänden im Innen- und Außenbereich, aber auch von Segeltüchern. Ein besonderes Anliegen soll sein, vorgefertigte Drucke auf Polyvinylchloridfilmen auch auf Vinylsubstrate auftragen zu können, wobei durch eine dritte Schicht eine Wanderung von Monomeren aus dem Vinylsubstrat in den Kleber bzw. in den Polyvinylchloridfilm verhindert werden soll, so daß die Adhäsion des Polyvinylchloridfilms auf den Träger nicht abnehmen kann.

Überzüge aus Polyvinylchlorid lassen allerdings bezüglich ihrer Verarbeitungseigenschaften, ihrer Dauerbeständigkeit, insbesondere bei hohen Temperaturen, und ihrer mechanischen Festigkeit noch zu wünschen übrig.

Darüber hinaus können gerade bei Rauminnenteilen diese rein physikalisch zweckbestimmten Voraussetzungen von optischen und ästhetischen Gesichtspunkten überlagert werden. Es besteht oft der Wunsch nach Informationsträgern z.B. in Schaltschränken technischer Anlagen, aber andererseits auch nach ansprechender, rein dekorativer Ausgestaltung von Gebäuden oder Einrichtungsgegenständen, insbesondere auch bei Möbeln.

Für das zu verwendende Wandverkleidungselement bedeutet dies die Möglichkeit zur Bedruckung und auch zur Reduzierung störender Glanzeffekte der Oberfläche durch Prägungen.

Die DE-A-27 30 899 beschreibt bereits ein Wandverkleidungsmaterial, dessen Trägerschicht aber bezüglich seiner mechanischen Eigenschaften noch zu wünschen übrig läßt.

Die GB-A-1 481 876 beschreibt ein geprägtes Blattmaterial mit einer sogenannten Reib- oder Lauffläche, das als rutschsichere Auflage dienen soll.

Das DE-U-78 33 995 beschreibt eine Werkstoffplatte mit einer Folie aus thermoplastischem Kunststoff, die unter anderem auch als Wand- oder Deckenverkleidung geeignet ist. Die in diesem Dokument beschriebenen Materialien sind jedoch nicht zufriedenstellend, was ihre Prägbarkeit betrifft.

Um den Verarbeitungsvorgang, insbesondere das Aufziehen der Folie auf den jeweiligen Träger, zu erleichtern, soll die Folie eine ausreichende Steifigkeit aufweisen und zudem in der Weise vorbehandelt sein, daß eine Haftung der Folie auf dem Träger sichergestellt ist.

Es bestand daher die Aufgabe, eine Überzugsfolie vorzuschlagen, die einerseits preiswert und in einfacher Weise herstellbar ist, eine hohe Schutzfunktion aufweist, eine ausreichende Steifigkeit zeigt sowie die Möglichkeit einer Bedruckung und Prägung im Hinblick sowohl auf die Präsentation von Hinweisen verschiedenster Art, aber auch auf eine rein dekorative Ausgestaltung ermöglicht.

Gelöst wird diese Aufgabe durch die Verwendung, die in Patentanspruch 1 beschrieben ist und deren nähere Ausgestaltungsformen in den Unteransprüchen 2 bis 8 angegeben sind.

Als Polyolefine werden erfindungsgemäß neben Polyethylen insbesondere Polypropylen als isotaktisches Homopolymerisat oder als Copolymerisate des Propylens mit Ethylen oder Alpha-Olefinen mit 4 bis 8 C-Atomen oder eine Mischung aus Propylen-Homo- und Propylen-Copolymerisaten verwendet.

Vorzugsweise jedoch werden Polyestermaterialien eingesetzt, zu denen sowohl Polyester-Homo- und -Copolymerisate als auch Gemische verschiedener Polyester sowie Abmischungen oder Blends von Polyestern mit anderen Polymeren zählen.

Beispiele für Polyester sind Homo- oder Copolykondensate aus Terephthalsäure oder Isophthalsäure, 2,6-Naphthalindicarbonsäure mit Glykolen mit 2 bis 10 Kohlenstoffatomen wie Polyethylenterephthalat, Polytetramethylenterephthalat, Polybutylenterephthalat, Polyethylen-2,6-naphthalindicarboxylat oder Polyethylen-p-hydroxybenzoat.

Die Copolyester können als Bausteine auch Adipinsäure, Sebazinsäure, Phthalsäure, Isophthalsäure, 5-Na-sulfoisophthalat, polyfunktionelle Komponenten wie Trimelithsäure u.a. enthalten.

Die Polyestergemische können beispielsweise aus Polyethylenterephthalat und Polybutylenterephthalat oder Polyethylenterephthalat und wenigstens einem Alkalimetallsalz eines Derivats der Sulfonsäure wie z.B. der Sulfoisophthalsäure bestehen.

2

Beispiele für Polymere, die in den Polyester eingearbeitet oder eingemischt werden können, sind Polyolefin-Homo-oder -Copolymere wie Polyethylen, Polypropylen, Poly-4-methylpenten, Ethylen-Vinylacetat-Copolymere, die ihrerseits verseift sein können, Ionomere, Polyamide, Polycarbonate, Polysulfone etc.

Die erfindungsgemäß verwendeten Überzugsfolien werden nach dem Extrusions- bzw. Coextrusionsverfahren hergestellt, wobei das abgemischte Material aufgeschmolzen, zu einer Vorfolie extrudiert und auf einer Kühlwalze abgeschreckt wird. Vorzugsweise kann nach dem Abschrecken der Vorfolie auf der Kühlwalze die Folie in Längsrichtung und/oder in Querrichtung bei Temperaturen zwischen dem Glaspunkt des Polymeren und 160 °C sowie einem Streckverhältnis im Bereich von 2,0 bis 6,0, vorzugsweise bei 3,2 bis 4,2, verstreckt und anschließend bei Temperaturen zwischen 150 und 240 °C, vorzugsweise bei 200 bis 235 °C, hitzefixiert werden.

Die Anzahl und die Reihenfolge der Längs- und Querstreckstufen ist nicht streng vorgegeben, sondern richtet sich nach den Erfordernissen der erfindungsgemäßen Verwendung im speziellen Anwendungsbereich. Die einzelnen Streckvorgänge "längs" und "quer" können ein- und mehrstufig durchgeführt werden. Eine gleichzeitige Längs- und Querstreckung (Simultanstreckung) ist ebenso möglich.

Die Folien können entweder nur in einer Richtung eine gewisse erhöhte Festigkeit aufweisen (monoaxial gestreckte Folien), aber auch in Quer- und/oder Längsrichtung besonders hohe Festigkeit aufweisen (tensilized oder supertensilized bzw. anisotrope Folien) oder in der bevorzugten Ausführungsform in beiden Richtungen ausgewogene dimensionsstabile Eigenschaften aufweisen (balanced oder isotrope Folien). Besonders bevorzugt sind die sehr dimensionsstabilen isotropen Folien aus Polyethylenterephthalat.

Die halogenfreien thermoplastischen Kunststoffolien für die erfindungsgemäß verwendete Überzugsfolie können transparent sowie trübe bis opak sein. Der Trübungsgrad kann durch geeignete inerte Füllstoffe, die dem Folienmaterial zugesetzt werden, erreicht werden. Bei der Streckorientierung der Folie entstehen wegen dieser Füllstoffe Mikrorisse und winzig kleine Hohlräume ("voids"), die die Trübung bzw. das opake Aussehen der Folie hervorrufen können.

Als Füllstoffe werden der Folie die üblichen anorganischen oder organischen pulverförmigen Materialien als Additive zugesetzt. Geeignete anorganische Füllstoffe sind Aluminiumoxid, Aluminiumsulfat, Bariumsulfat, Calciumcarbonat, Magnesiumcarbonat, Silicate wie Aluminiumsilicat (Kaolinton) und Magnesiumsilicat (Talkum), Siliciumdioxid und/oder Titandioxid, worunter Calciumcarbonat, Siliciumdioxid, Titandioxid oder Mischungen davon bevorzugt eingesetzt werden. Calciumcarbonat (Kreide) ist besonders bevorzugt.

Als organische Partikel kommen die in der DE-OS 33 13 923 beschriebenen vernetzten organischen, gehärteten organischen, globularen oder vernetzten organischen kugelförmigen Partikel mit funktionalen Gruppen und enger Korngrössenverteilung in Frage. Gerade bei der Anwendung von organischen Partikeln ist die Transparenz der Folie auch nach der Streckorientierung der Folie weiterhin gegeben. Daneben können auch Teilchen bestehend aus Katalysatorresten oder Mischungen aller drei Teilchenarten vorhanden sein.

Die Füllstoffmenge beträgt normalerweise 0 bis 30 Gew.-%, vorzugsweise 5 bis 27 Gew.-%, bezogen auf das Gesamtgewicht der Mischung aus Füllstoffen und Polymermaterial. Die mittlere Teilchengröße des pulverförmigen Füllstoffes liegt im Bereich von 2 bis 5 $\mu$m, vorzugsweise im Bereich von 3 bis 4 $\mu$m. Die Folie kann auch zweckmäßige Additive wie Antioxidantien, Antistatika, Farbstoffe und/oder Stabilisatoren in einer jeweils wirksamen Menge enthalten.

Vorzugsweise können sowohl die Basis- als auch die Deckfolie coronabehandelt werden, um ihre Bedruckbarkeit zu gewährleisten und ihre Haftfestigkeit zu verbessern. Die Bedruckbarkeit kann aber auch durch eine Haftvermittlerbeschichtung, die anstelle der Coronabehandlung oder auch zusätzlich zu dieser vorgesehen werden kann, erreicht werden. Die Basisfolie wird beidseitig behandelt, während die Deckfolie einer einseitigen Oberflächenbehandlung unterzogen wird.

Die Oberflächenbeschichtungen der Folie mit Haftvermittlern (Primern) und/oder mit Klebern dienen vorzugsweise der Variation ihrer Hafteigenschaften, insbesondere dann, wenn weitere Polymerfolien, insbesondere Polyesterfolien, aufkaschiert werden sollen. Zu den Haftvermittlern und Klebern zählen Lösungen oder Dispersionen, die u.a. vernetzbare, härtbare oder bereits gehärtete oder vernetzte Substanzen bzw. Partikel enthalten. Beispiele für Haftvermittler und Kleber sind Copolyester, Polyurethane, Epoxide, wärmehärtbare Acrylsäureabkömmlinge, Polysiloxane, Styrol-Butadien-Kautschuke oder Ethylen-Vinylacetat-Copolymere oder Mischungen von diesen.

Während diese Komponenten - als Haftvermittler verwendet - vollständig auf der Polyesterfolie verbleiben, wird der "Haftvermittler" Trichloressigsäure zum Anätzen der Folienoberfläche verwendet und danach ausgewaschen, so daß nur ein verschwindend geringer Anteil Trichloressigsäure auf der Folienoberfläche verbleibt. Die angeätzte Folie wirkt haftvermittelnd. Als bevorzugte Haftvermittler werden Polyurethan und Trichloressigsäure verwendet. Zum Aufkaschieren von haftvermittelten Folien untereinander und auch zum Aufbringen der Überzugsfolie auf die Trägerschicht werden Kleber verwendet. Bevorzugt sind halogenfreie Zweikomponentenkleber wie Polyurethankleber. Daneben können auch siegelfähige Schichten, zu denen sowohl die heißsiegelfähigen als auch die kaltsiegelfähigen zählen, als Oberflächenmodifikatoren eingesetzt werden. Durch diese Schichten kann die Haftung der Überzugsfolie z.B. an der Trägerschicht sichergestellt werden.

In der bevorzugten Ausführungsform besitzt die freie Oberfläche der Deckfolie der erfindungsgemäß verwendeten Überzugsfolie keine Hafteigenschaften; auf sie kann eine nicht siegelbare Oberflächenschicht aufgetragen sein, vorzugsweise aus Propylenhomopolymeren mit entsprechenden Additiven wie z. B. Gleitmittel oder Antistatika, insbesondere Antiadhäsiva.

Außerdem soll die freie Oberfläche der Deckfolie eine Prägung aufweisen, um die Reflexionseigenschaften zu reduzieren und damit der Überzugsfolie ein optisch ansprechendes Aussehen zu gewährleisten. Gleichzeitig wird durch die Prägung die Steifigkeit erhöht.

Als Prägemuster kann eine Holzmaserung vorgesehen sein oder eine andere regelmäßige oder unregelmäßige Oberflächenstrukturierung, die das menschliche Geschmacksempfinden angenehm anspricht. Die Prägung wird mittels eines Prägewerkzeugs, insbesondere eines Heißprägewerkzeugs, an der Oberflächenschicht vorgenommen, bevor diese auf das Verbundelement aufkaschiert wird, oder aber auch wenn sie bereits mit diesem verbunden ist.

Die Bedruckung kann sowohl auf der freien Seite der Basisfolie (Rückseite) als auch auf der Oberfläche (Frontseite), die der Deckfolie zugewandt ist, vorzugsweise mit halogenfreien Druckfarben, aufgebracht werden. Durch die Bedruckung sollen, je nach angewandter Variante, weder die Hafteigenschaften noch die Prägemöglichkeit reduziert werden.

In einer weiteren Ausführungsform der erfindungsgemäß verwendeten Überzugsfolie besteht die Basisfolie aus einem gefärbten thermoplastischen Kunststoff, insbesondere einem durch halogenfreie Farbpigmente gefärbten Kunststoff. Auch eine bereits gefärbte Folie kann zusätzlich durch eine Bedruckung weiter modifiziert werden.

Bevorzugt wird die Bedruckung auf der Seite der Basisfolie vorgesehen, die der Deckfolie zugewandt ist, da hierbei der Vorteil eines umfassenderen Schutzes des Druckbildes resultiert, weil dieses dann im Frontaldruck auf der Frontseite der Basisfolie aufgetragen ist und durch die Deckfolie geschützt wird. Die Deckfolie ihrerseits kann dann die für die Prägung erforderliche höhere Weichheit aufweisen, während die Basisfolie wesentlich steifer sein kann, wodurch die Überzugsfolie in der bevorzugten Ausführungsform einschließlich Prägung und Druckbild zusätzliche Vorzüge gegenüber einschichtigen Folien gewinnt.

Die Dicke der Überzugsfolie liegt im Bereich von 5 bis 400 $\mu$m, vorzugsweise bei 10 bis 300 $\mu$m, wobei das Dickenverhältnis der Dicke der Basisfolie zu der Dicke der Deckfolie im Bereich von 0,1 bis 5,0, vorzugsweise von 1 bis 3, liegt. Im Verbund ist die Basisfolie vorzugsweise dicker als die Deckfolie.

Der erfindungsgemäßen Verwendung zufolge wird eine Mehrschichtfolie umfassend eine Trägerschicht und eine Überzugsfolie zunächst für sich alleine hergestellt und daran anschließend auf eine Trägerschicht aufgebracht. Die Trägerschicht kann aus Metall wie Stahl, Eisen, Zink, Kupfer oder Aluminium bestehen. Gegebenenfalls können Holz oder Spanplatten, aber auch Stein und Beton oder Keramik mit der Folie überzogen sein. Erfindungsgemäß handelt es sich um Bauteile wie Wand-, Tür- und Deckenelemente, aber auch um Einrichtungsgegenstände sowie auch um Gegenstände im technischen Bereich, zu denen vorwiegend Behältnisse und Schränke für elektrische bzw. elektronische Installationen zählen (z.B. Schaltschranktüren).

Die erfindungsgemäß verwendete Überzugsfolie ist wie bereits erwähnt mit einem Kleber, vorzugsweise einem halogenfreien Kleber auf Basis von Polyurethan, einem sogenannten Zweikomponentenkleber, mit der Trägerschicht zu dem ebenfalls erfindungsgemäßen Verbundelement zusammengefügt.

Die Herstellung eines flächenhaften dekorativen Verbundelementes erfolgt, indem die Überzugsfolie quasi wie eine Tapete auf der freien, jedoch haftvermittelnd vorbehandelten Oberfläche der Basisfolie mit Klebstoff beschichtet und dann auf die Trägerschicht aufgebracht wird.

Durch den Einsatz der erfindungsgemäß verwendeten Überzugsfolie sind insbesondere vorteilhafte Eigenschaften des Verbundelementes zu erreichen, was die mechanischen Eigenschaften und auch die Dauerbeständigkeit unter Hitzeeinwirkung betrifft.

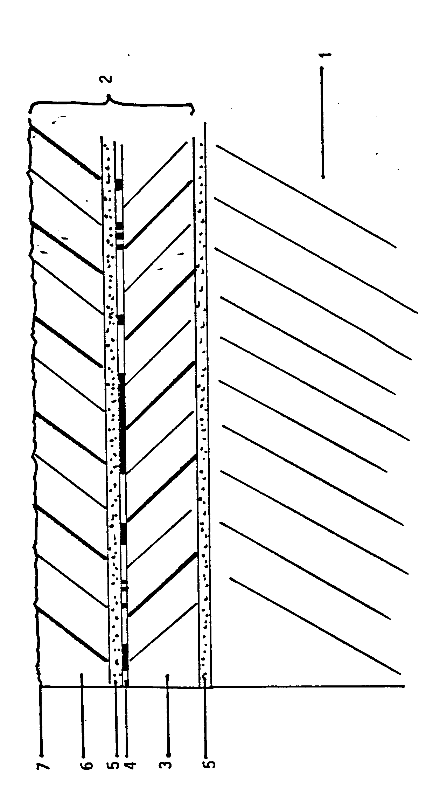

Das folgende Ausführungsbeispiel soll zusammen mit der beigefügten Abbildung die Erfindung erläutern, ohne darauf beschränkt zu sein.

Beispiel

Eine Überzugsfolie, bestehend aus
1.) einer coronabehandelten und mit einem Haftvermittler auf Basis von Trichloressigsäure beidseitig behandelten biaxial streckorientierten und hitzefixierten Polyethylenterephthalatfolie, die eine Dicke von 125 µm besitzt und die ein im Frontaldruck aufgetragenes Druckbild aus halogenfreien Druckfarben auf Mischpolymerisat-Basis trägt, und

2.) einer auf den Frontaldruck jener Schicht mit Hilfe eines Polyurethanklebers kaschierten, ebenfalls biaxial streckorientierten und hitzefixierten und einseitig mit Trichloressigsäure geprimerten Polyethylenterephthalatfolie mit einer Dicke von 12 µm, die einseitig eine Oberflächenprägung trägt,

wird so auf eine aus Stahl bestehende Metallplatte aufgebracht, daß die Oberflächenprägung die äußerste Schicht ist. Zum Kleben der Folie auf die Metalloberfläche wurde ein Zweikomponentenkleber der Firma H.B. Fuller GmbH, München, verwendet (L 509-32 + 10% Härter). Das Druckbild des so entstandenen Verbundelementes ist durch die Deckfolie vor mechanischen und korrosiven Einflüssen geschützt und zeigt keinen störenden Glanzeffekt.

Das Verbundelement wurde hinsichtlich seines Brandverhaltens untersucht. Die Ergebnisse zeigen, daß sie den Forderungen nach ATS 1000.001 entsprechen.

In der Tabelle ist die Zusammensetzung der Brandgase widergegeben. Die Werte entsprechen der Prüfung mit Beflammung. Die Prüfung ohne Beflammung erbrachte lediglich eine Verschwelung ohne Brandgasentwicklung.

Zusammensetzung der Brandgase nach ATS 1000.001 mit Beflammung

|  | nach 1,5 min (ppm) | nach 4 min (ppm) |
| --- | --- | --- |
| HCN | 0 | 0 |
| CO | <10 | <10 |
| $NO_x$ | < 0,5 | < 0,5 |
| $SO_2$ | 0 | 0 |
| HF | 0 | 0 |
| HCL | 0 | 0 |

Die Folie wurde auch einer Elementenanalyse unterzogen. Die Analyse ergab einen Chlorgehalt von <30 ppm, der durch die Primerung mit Trichloressigsäure hervorgerufen wurde. In einem Vergleichsbeispiel, bei dem anstelle von Trichloressigsäure ein Polyurethan als Haftvermittler benutzt wurde, konnte kein Chlor nachgewiesen werden. Wie die Zusammensetzung der Brandgase aber zeigt, findet der geringe Chlorgehalt von <30 ppm in der Folie keinen adäquaten Niederschlag als Chlorwasserstoffgas, so daß sich die Forderung nach Halogenfreiheit der Folie im engeren Sinne zwar lediglich auf eine Folie per se bezieht, für die Primerung aber durchaus halogenhaltige Substanzen verwendet werden können, wenn diese wie die Trichloressigsäure so weit als möglich vor einer Kaschierung wieder entfernt werden.

Ein Verbundelement ist in der Abbildung dargestellt. Sie zeigt einen senkrechten Schnitt in seitlicher Ansicht.

Die einzelnen Schichten werden durch Bezugsziffern verdeutlicht. Die Metallschicht 1 trägt die Folie aus thermoplastischem Kunststoff 2, die aus mehreren Schichten besteht: Die Basisfolie 3 trägt auf einer Seite eine Bedruckung 4 und eine einseitige Oberflächenbeschichtung 5. Die Deckfolie 6 weist ebenso eine Oberflächenbeschichtung 5 auf und eine Prägung 7.

**Patentansprüche**

1. Verwendung einer geprägten Mehrschichtfolie umfassend eine Basisfolie und eine Deckfolie, bei der
   - die Basisfolie aus einem halogenfreien thermoplastischen Polyester oder Polyolefin besteht und streckorientiert ist,
   - die Basisfolie beidseitig oberflächlich eine erhöhte Haftfähigkeit aufweist,
   - die Deckfolie aus einem halogenfreien thermoplastischen Polyolefin oder Polyester besteht
   - und die Deckfolie auf der freien Oberfläche die Prägung trägt,
   zum Überziehen von Wand-, Tür- und Deckenelementen sowie von Einrichtungsgegenständen und Gegenständen im technischen Bereich.

2. Verwendung nach Anspruch 1, dadurch gekennzeichnet, daß der halogenfreie thermoplastische Polyester eine streckorientierte und hitzefixierte Polyethylenterephthalatfolie ist.

3. Verwendung nach Anspruch 1 oder 2, dadurch gekennzeichnet, daß die Basisfolie ein- oder beidseitig eine Haftvermittlerbeschichtung trägt oder mit Trichloressigsäure behandelt ist und/oder coronabehan-

5

delt ist.

4. Verwendung nach einem der Ansprüche 1 bis 3, dadurch gekennzeichnet, daß die Basisfolie eine Bedruckung aus halogenfreien Druckfarben aufweist.

5. Verwendung nach Anspruch 4, dadurch gekennzeichnet, daß die Bedruckung auf der der Deckfolie zugewandten Oberfläche der Basisfolie angeordnet ist.

6. Verwendung nach einem der Ansprüche 1 bis 5, dadurch gekennzeichnet, daß die Deckfolie durch Kleberkaschierung mit der Basisfolie verbunden ist.

7. Verwendung nach einem der Ansprüche 1 bis 6, dadurch gekennzeichnet, daß die Deckfolie einseitig einer die Haftfähigkeit dieser Oberfläche erhöhenden Behandlung unterzogen wurde.

8. Verwendung nach einem der Ansprüche 1 bis 7, dadurch gekennzeichnet, daß die Folie eine Gesamtdicke im Bereich von 5 bis 400 $\mu$m, vorzugsweise 10 bis 300 $\mu$m, aufweist, wobei das Dickenverhältnis der Basisfolie zu der Deckfolie im Bereich von 0,1 bis 5,0, bevorzugt von 1 bis 3, liegt.

## Claims

1. Use of an embossed multilayered film comprising a base film and a top film, where
   - the base film is comprised of a halogen-free thermoplastic polyester or polyolefin,
   - both surfaces of the base film exhibit an increased adhesive strength,
   - the top film is comprised of a halogen-free thermoplastic polyester or polyolefin, and
   - the embossing is provided on the free surface of the top film,
   for the coating of wall, door and ceiling elements and of furniture and industrial equipment.

2. Use as claimed in claim 1, wherein said halogen-free thermoplastic polyester is a stretch-oriented, heat-set polyethylene terephthalate film.

3. Use as claimed in claim 1 or 2, wherein one or the two surfaces of the base film is/are provided with an adhesion-promoting coating or has/have been treated with trichloroacetic acid and/or has/have been subjected to a corona treatment.

4. Use as claimed in any of claims 1 to 3, wherein the base film has been printed with halogen-free printing inks.

5. Use as claimed in claim 4, wherein the printing is provided on that surface of the base film which is directed towards the top film.

6. Use as claimed in any of claims 1 to 5, wherein the top film and the base film are joined by means of adhesive bonding.

7. Use as claimed in any of claims 1 to 6, wherein one surface of the top film has been subjected to an adhesion-promoting treatment.

8. Use as claimed in any of claims 1 to 7, wherein the film has a total thickness in the range of 5 to 400 $\mu$m, preferably of 10 to 300 $\mu$m, with the thickness ratio of the base film to the top film ranging between 0.1 : 1 and 5.0 : 1, preferably between 1 : 1 and 3 : 1.

## Revendications

1. Utilisation d'une feuille multicouche gaufrée, comprenant une feuille de base et une feuille de couverture, dans laquelle
   - la feuille de base est constituée d'un polyester ou d'une polyoléfine thermoplastique exempt d'halogène, et est orientée par étirage,
   - la feuille de base présente superficiellement, sur ses deux faces, une adhésivité améliorée,
   - la feuille de couverture est constituée d'un polyester ou d'une polyoléfine thermoplastique exempt

6

d'halogène, et
- la feuille de couverture comporte un gaufrage sur sa surface libre,
pour le revêtement d'éléments de parois, de portes et de plafonds ainsi que d'éléments d'équipements et d'éléments du domaine technique.

2. Utilisation selon la revendication 1, caractérisée en ce que le polyester thermoplastique exempt d'halogène est une feuille de poly(téréphtalate d'éthylène) orientée par étirage et thermofixée.

3. Utilisation selon la revendication 1 ou 2, caractérisée en ce que la feuille de base comporte, sur une ou deux face(s), un revêtement adhésif ou est traitée par de l'acide trichloroacétique et/ou par décharge corona.

4. Utilisation selon l'une des revendications 1 à 3, caractérisée en ce que la feuille de base présente une impression en encres d'imprimerie sans halogène.

5. Utilisation selon la revendication 4, caractérisée en ce que l'impression est pratiquée à la surface de la feuille de base placée contre la feuille de couverture.

6. Utilisation selon l'une des revendications 1 à 5, caractérisée en ce que la feuille de couverture est liée à la feuille de base par enduction de colle.

7. Utilisation selon l'une des revendications 1 à 6, caractérisée en ce que la feuille de couverture est soumise, sur une face, à un traitement pour améliorer l'adhésivité de cette surface.

8. Utilisation selon l'une des revendications 1 à 7, caractérisée en ce que la feuille présente une épaisseur totale de 5 à 400 $\mu$m, de préférence de 10 à 300 $\mu$m, le rapport des épaisseurs de la feuille de base à la feuille de couverture étant compris dans l'intervalle 0,1-5,0, de préférence 1-3.